Europäisches Patentamt

European Patent Office

Office européen des brevets

(11) Veröffentlichungsnummer: **0 399 069 B1**

(12) **EUROPÄISCHE PATENTSCHRIFT**

(45) Veröffentlichungstag der Patentschrift: **07.01.93**

(21) Anmeldenummer: **89109255.3**

(22) Anmeldetag: **23.05.89**

(51) Int. Cl.⁵: **G01M 15/00**, G01L 23/08, G01L 27/00, F02D 41/04

(54) Verfahren zur Bestimmung des Brennraumdruckes in einem Zylinder einer Brennkraftmaschine mit einem Drucksensor.

(43) Veröffentlichungstag der Anmeldung:
28.11.90 Patentblatt 90/48

(45) Bekanntmachung des Hinweises auf die Patenterteilung:
07.01.93 Patentblatt 93/01

(84) Benannte Vertragsstaaten:
DE FR GB IT

(56) Entgegenhaltungen:
DE-A- 3 036 355
DE-A- 3 632 221
GB-A- 2 187 001

(73) Patentinhaber: SIEMENS AKTIENGESELL-SCHAFT
Wittelsbacherplatz 2
W-8000 München 2(DE)

(72) Erfinder: Krebs, Stefan, Dr.-Ing.
Altdorfer Strasse 2A
W-8400 Regensburg(DE)

EP 0 399 069 B1

**Beschreibung**

Die Erfindung betrifft ein Verfahren gemäß dem Oberbegriff des Anspruch 1 ( DE-OS 37 04 837 ).

Die Empfindlichkeit von Drucksensoren - der physikalische Zusammenhang zwischen Messdruck und Sensorsignal - für den Laboreinsatz wird durch aufwendige Konstruktionen in engen Toleranzen gehalten. Die Auswertung der Sensorsignale erfolgt entweder mit der vom Hersteller definierten Empfindlichkeit oder es wird bei hohen Anforderungen an die Messgenauigkeit eine Eichung der Messeinrichtungen unmittelbar vor dem Versuch (z.B. mit einer Druckwaage) durchgeführt.

Bei Kraftfahrzeugbrennkraftmaschinen werden Drucksensoren zur Bestimmung des Brennraumdruckes in den Zylindern verwendet, deren Ausgangssignale für die Diagnose und Regelung der Verbrennung, zur Klopfregelung, zur Bestimmung der geleisteten Arbeit usw. ausgewertet werden.

Bei diesen Drucksensoren können wegen der mobilen Anwendung und der notwendigen kostengünstigen Konstruktion und Fertigung einige Störgrößen wie Fertigungstoleranzen, Sensoralterung, Signaldrift und Temperaturabhängigkeit der Empfindlichkeit nicht ausreichend kompensiert werden. Bei einem aus der DE-OS 37 04 837 bekannten Verfahren dieser Art wird in einem sich über mehrere Arbeitszyklen erstreckenden verbrennungsfreien Zustand (z.B. bei Schubbetrieb) der maximale Brennraumdruck ermittelt und mit einem gespeicherten Bezugswert verglichen. Mit der Differenz oder dem Verhältnis dieser beiden Werte wird den bei normaler Verbrennung ermittelte maximale Brennraumdruck korrigiert. Nachteilig an diesem Verfahren ist, daß der Korrekturwert in einer ersten Betriebsart ermittelt wird und anschließend auf Signale angewendet wird, die in einer anderen Betriebsart ermittelt werden, bei der ganz andere Brennraumbedingungen vorliegen. Dadurch kann es zu größeren Messfehlern kommen.

Der Erfindung liegt die Aufgabe zugrunde, die Meßgenauigkeit eines Drucksensors zur Bestimmung des Brennraumdruckes in einem Zylinder einer Brennkraftmaschine während des normalen gefeuerten Betriebes zu erhöhen.

Diese Aufgabe wird erfindungsgemäß durch die im Kennzeichen des Anspruchs 1 genannten Merkmale gelöst. Das erfindungsgemäße Verfahren nutzt die Kinematik des Kurbeltriebes der Brennkraftmaschine, indem in einem definierten Kurbelwinkelbereich die Druckänderung im Brennraum des Zylinders aus der polytropen Zustandsänderung ermittelt wird. Die Erfindung ermöglicht es, den Drucksensor unmittelbar vor jeder Verbrennung zu eichen.

Bei diesem Verfahren ist die Kenntnis eines Referenzdruckes erforderlich. Vorzugsweise dient als Referenzdruck der Atmosphärendruck oder eine Ersatzgröße, die ausgehend von ohnehin gemessenen Parametern gebildet wird und die in bekannter Weise vom Atmoshärendruck abhängt. Dieses Vorgehen beruht auf der Erkenntnis, daß der Brennraumdruck im oberen Totpunkt beim Ladungswechsel wegen gleichzeitiger Öffnung von Ein- und Auslaßventil und kurzzeitigem Stillstand des Kolbens praktisch dem Atmosphärendruck entspricht. Dies gilt angenähert für alle Betriebszustände der Brennkraftmaschine. Mit Hilfe der polytropen Zustandsänderung zwischen zwei weiteren, bestimmten Stellungen des Kolbens wird die Empfindlichkeit des verwendeten Drucksensors ermittelt und mit dieser das gemessene Sensorsignal korrigiert.

In Weiterbildung des erfindungsgemäßen Verfahrens ist eine Steigerung der Meßgenauigkeit möglich, wenn die den bestimmten Kolbenstellungen zugeordneten Sensorsignale durch Mittelwertbildung aus einer vorgegebenen Zahl von in einem bestimmten Bereich vor und nach der jeweiligen Kolbenstellung oder aus einer vorgegebenen Zahl von in aufeinanderfolgenden Arbeitszyklen erfaßten Werten ermittelt werden.

Dementsprechend kann auch die der Berechnung des Druckes zugrundegelegte Empfindlichkeit des Drucksensors durch gleitende Mittelwertbildung aus einer vorgegebenen Zahl von in aufeinanderfolgenden Arbeitszyklen berechneten Werten ermittelt werden.

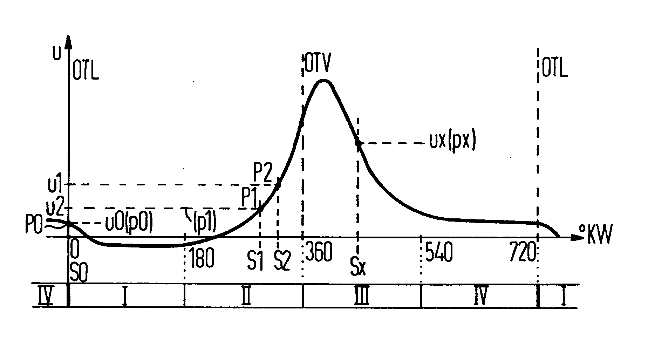

In der Zeichnung ist der Verlauf des Sensorsignals u eines Drucksensors, der im Brennraum eines Zylinders einer Brennkraftmaschine angeordnet ist, über einen ganzen Arbeitszyklus dieses Zylinders dargestellt. Auf der Abszisse ist der Kurbelwellenwinkel von 0 Grad bis 720 Grad KW, entsprechend zwei vollen Umdrehungen der Kurbelwelle, aufgetragen. Dabei entsprechend die Werte 0 Grad und 720 Grad den Kolbenstellungen So im oberen Totpunkt OTL bei Ladungswechsel, d. h., zwischen Abgasausstoßtakt IV und Gemischansaugtakt I des Arbeitszyklus, wobei sowohl das Auslaß- als auch das Einlaßventil des Zylinders geöffnet ist und der Druck im Zylinder in etwa dem Atmosphärendruck po entspricht.

Der Wert 360 Grad KW entspricht der Kolbenstellung im oberen Totpunkt OTV bei Verbrennung, also zwischen dem Verdichtungstakt II und dem Arbeitstakt III des Arbeitszyklus. Der ungefähre Zündzeitpunkt ist durch einen Pfeil angedeutet.

Zur Kalibrierung des Drucksensors sind drei Sensorsignale uo, u1 und u2 entsprechend den Brennraumdruckwerten po, p1 und p2 an drei vorgegebenen Kolbenstellungen So, S1 und S2 erforderlich.

Als erste Kolbenstellung So wird der obere Totpunkt OTL entsprechend 0 Grad KW festgesetzt, wobei das Sensorsignal uo in dieser Stellung den Atmosphärendruck po repräsentiert, wie bereits ausgeführt.

Die zweite Kolbenstellung S1 wird in diesem Ausführungsbeispiel bei 290 Grad KW und die dritte Kolbensstellung S2 bei 310 Grad KW vorgegeben. Beide Kolbenstellungen liegen im Verdichtungstakt II des Arbeitszyklus. Bei den beiden Kolbenstellungen S1 und S2 werden die Sensorsignale u1 und u2, entsprechend den Druckwerten p1 und p2, gemessen. Dem entsprechen die Punkte P1 und P2 auf der Kurve des Sensorsignals.

Die polytrope Zustandsänderung von P1 nach P2 ist:

$$\frac{p2}{p1} = \left(\frac{V1}{V2}\right)^n \qquad (1)$$

wobei V1 und V2 die Volumina des Brennraumes bei den Kolbenstellungen S1, S2 sind und n der Polytropenexponent ist. Dieser ist während der Verdichtungsphase etwa konstant mit dem Wert n 1,35.

Die Sensorempfindlichkeit E ist dann:

$$E = \frac{\Delta p}{\Delta u} = \frac{p2 - p1}{u2 - u1} \qquad (2)$$

(1) umgeformt ergibt:

$$\frac{p2 - p1}{p1} = \left(\frac{V1}{V2}\right)^n - 1 \qquad (3)$$

Aus (2) und (3) wird:

$$\frac{E(u2 - u1)}{p1} = \left(\frac{V1}{V2}\right)^n - 1 \qquad (4)$$

Einen linearen Drucksensor vorausgesetzt, ergibt sich der Absolutdruck p1 im Punkt P1 aus dem Referenzdruck po im Punkt Po entsprechend (2):

p1 = po + E(u1 - uo)    (5)

und damit der Druck px an einer beliebigen Kolbenstellung Sx:

px = po + E(ux - uo)    (5a)

aus (4) und in (5) ergibt sich:

$$E = p_0 \left[ \cfrac{1}{\cfrac{u_2 - u_1}{\left(\cfrac{V_1}{V_2}\right)^{n} - 1} - u_1 + u_0} \right] \qquad (6)$$

Mit

$$\left(\frac{V_1}{V_2}\right)^{n} - 1 \;=\; K \qquad (7)$$

wird aus (6):

$$E = p_0 \left( \cfrac{1}{\cfrac{u_2 - u_1}{K} - u_1 + u_0} \right) \qquad (8)$$

Mit (8) ist die Sensorempfindlichkeit E in jedem Arbeitszyklus einfach zu berechnen. Diese in (5a) eingesetzt, ergibt den gewünschten Druckwert px mit guter Genauigkeit.

Da das Brennraumvolumen V abhängig von der Kolbenstellung, vom Verdichtungsverhältnis und von der Motorgeometrie ist und überdies, wie auch der Polytropenexponent n, betriebspunktabhängig ist, d.h., abhängig von Motordrehzahl und Motorlast, ist es sinnvoll, den Wert K aus (7) in einem betriebspunktabhängigen Kennfeld abzuspeichern und bei jeder Berechnung der Sensorempfindlichkeit E entsprechend (8) aus diesem Kennfeld zu entnehmen.

Die Messgenauigkeit kann noch gesteigert werden, wenn für die Berechnung nicht Einzelwerte der Sensosignale uo, u1 und u2, sondern Mittelwerte aus einer vorgegebenen Anzahl von in einem bestimmten Bereich, zum Beispiel 5 Grad vor und 5 Grad nach der jeweiligen vorgegebenen Kolbenstellung So, S1 und S2, oder Werte aus einer gleitenden Mittelwertbildung über eine vorgegebene Zahl von Arbeitszyklen verwendet werden.

Auch der Wert der Empfindlichkeit E kann durch gleitende Mittelwertbildung stabilisiert werden, da er sich bei intaktem Drucksensor nur sehr langsam, wenn überhaupt, ändert.

Die Überwachung der Empfindlichkeit E und deren Änderungsgeschwindigkeit kann auch zur Überwachung des Drucksensors (auf Kurzschluß, Unterbrechung und langsames Unempfindlichwerden) herangezogen werden, wobei ein Fehlersignal ausgelöst wird, wenn die ermittelte Empfindlichkeit E oder deren zeitliche Änderung außerhalb eines vorgegebenen Wertebereichs liegt.

## Patentansprüche

1. Verfahren zur Bestimmung des Brennraumdruckes in einem Zylinder einer Brennkraftmaschine mit einem Drucksensor, **dadurch gekennzeichnet**, daß das Sensorsignal (uo, u1, u2) bei einer ersten (So), einer zweiten (S1) und einer dritten (S2) Kolbenstellung eines Arbeitszyklus des Zylinders erfaßt und gespeichert wird,
daß dem Sensorsignal (uo) bei der ersten Kolbenstellung (So) ein Referenzdruck (po) zugeordnet wird,
und daß der Druck (px) bei einer beliebigen Kolbenstellung (Sx) nach

4

px = po + E(ux - uo)    (5a)

berechnet wird, wobei

$$E = po \left[ \cfrac{1}{\cfrac{u2-u1}{K} - u1 + uo} \right] \quad (8)$$

ist, mit:

ux =    Sensorsignal bei einer beliebigen Kolbenstellung (Sx)
E =     Empfindlichkeit des Drucksensors,
K =     Konstante.

2.   Verfahren nach Anspruch 1, **dadurch gekennzeichnet**, daß der Referenzdruck (po) eine Funktion des Atmosphärendrucks ist.

3.   Verfahren nach Anspruch 1, **dadurch gekennzeichnet**, daß die erste vorgegebene Kolbenstellung (So) dem oberen Totpunkt (OTL) bei Ladungswechsel entspricht.

4.   Verfahren nach Anspruch 1, **dadurch gekennzeichnet**, daß die zweite und dritte Kolbenstellung (S1, S2) in einem Bereich von etwa 70 Grad bis 40 Grad KW vor dem oberen Totpunkt (OTV) bei Verbrennung liegen.

5.   Verfahren nach Anspruch 1, **dadurch gekennzeichnet**, daß die zweite und dritte Kolbenstellung (S1, S2) etwa 20 Grad KW voneinander entfernt liegen.

6.   Verfahren nach Anspruch 1, **dadurch gekennzeichnet**, daß wenigstens eines der den drei Kolbenstellungen (So, S1, S2) zugeordneten Sensorsignale (uo, u1, u2) durch Mittelwertbildung aus einer vorgegebenen Anzahl von in einem bestimmten Bereich vor und nach der jeweiligen Kolbenstellung (So, S1, S2) erfaßten Werten der Sensorsignale (uo, u1, u2) ermittelt wird.

7.   Verfahren nach Anspruch 1, **dadurch gekennzeichnet**, daß wenigstens eines der den drei Kolbenstellungen (So, S1, S2) zugeordneten Sensorsignale (uo, u1, u2) durch gleitende Mittelwertbildung aus einer vorgegebenen Anzahl von in aufeinanderfolgenden Arbeitszyklen erfaßten Werten der Sensorsignale (uo, u1, u2) ermittelt wird.

8.   Verfahren nach Anspruch 1, **dadurch gekennzeichnet,** daß die Empfindlichkeit (E) des Drucksensors durch gleitende Mittelwertbildung aus einer vorgegebenen Zahl von in aufeinanderfolgenden Arbeitszyklen berechneten Werten ermittelt wird.

9.   Verfahren nach Anspruch 1, **dadurch gekennzeichnet**, daß die Konstante (K) kurbelwellenwinkel- und betriebspunktabhängig in einem Kennfeld gespeichert ist.

10.  Verfahren nach Anspruch 9, **dadurch gekennzeichnet**, daß die Konstante gegeben ist durch

$$K = \left( \frac{V1}{V2} \right)^{n} - 1 \quad (7)$$

wobei

5

V1 = Brennraumvolumen des Zylinders bei der zweiten Kolbenstellung (S1),
V2 = Brennraumvolumen des Zylinders bei der dritten Kolbenstellung (S2), und
n = Polytropenexponent (beim Ottomotor etwa 1,35).

**11.** Verfahren nach Anspruch 10, **dadurch gekennzeichnet**, daß der der Brennkraftmaschine zugeordnete Polytropenexponent (n) betriebspunktabhängig in einem Kennfeld gespeichert ist.

**12.** Verfahren nach Anspruch 1, **dadurch gekennzeichnet**, daß ein Fehlersignal ausgelöst wird, wenn die ermittelte Empfindlichkeit (E) oder deren zeitliche Änderung außerhalb eines vorgegebenen Wertebereiches liegt.

**Claims**

**1.** Method to determine with a pressure sensor the combustion pressure in a cylinder of a combustion engine, characterised in that the sensor signal (uo, u1, u2) is detected in a first (So), a second (S1) and a third (S2) piston position of a working cycle of the cylinder and stored,
in that the sensor signal (uo) at the first piston position (So) is assigned a reference pressure (po),
and in that the pressure (px) at any desired piston position (Sx) is calculated according to

$$px = po + E(ux - uo), \qquad (5a)$$

in which case

$$E = po \left[ \cfrac{1}{\cfrac{u2-u1}{K} - u1 + uo} \right] \qquad (8)$$

where:
ux = sensor signal at any desired piston position (Sx)
E = sensitivity of the pressure sensor,
K = a constant.

**2.** Method according to Claim 1, characterised in that the reference pressure (po) is a function of the atmospheric pressure.

**3.** Method according to Claim 1, characterised in that the first predetermined piston position (So) corresponds to the upper dead-centre position (OTL) in the case of a load change.

**4.** Method according to Claim 1, characterised in that the second and third piston positions (S1, S2) are located in a region of approximately 70 degrees to 40 degrees KW before the upper dead-centre position (OTV) in the case of combustion.

**5.** Method according to Claim 1, characterised in that the second and third piston positions (S1, S2) are located approximately 20 degrees KW from one another.

**6.** Method according to Claim 1, characterised in that at least one of the sensor signals (uo, u1, u2) assigned to the three piston positions (So, S1, S2) is obtained by forming averages from a predetermined number of values of the sensor signals (uo, u1, u2) detected in a specific range before and after the respective piston position (So, S1, S2).

**7.** Method according to Claim 1, characterised in that at least one of the sensor signals (uo, u1, u2) assigned to the three piston positions (So, S1, S2) is obtained by forming sliding averages from a predetermined number of values of the sensor signals (uo, u1, u2) detected in successive working cycles.

8. Method according to Claim 1, characterised in that the sensitivity (E) of the pressure sensor is obtained by forming sliding averages from a predetermined number of values calculated in successive working cycles.

9. Method according to Claim 1, characterised in that the constant (K) is stored in a characteristic diagram as a function of crankshaft angle and operating point.

10. Method according to Claim 9, characterised in that the constant is given by

$$K = \frac{V1}{V2}^{n} - 1 \qquad (7)$$

where

V1 = combustion space volume of the cylinder in the second piston position (S1),
V2 = combustion space volume of the cylinder in the third piston position (S2), and
n = polytropic exponent (approximately 1.35 in the spark ignition engine).

11. Method according to Claim 10, characterised in that the polytropic exponent (n) assigned to the internal combustion engine is stored in a characteristic diagram as a function of the operating point.

12. Method according to Claim 1, characterised in that an error signal is triggered if the obtained sensitivity (E) or its variation over time lies outside a predetermined range of values.

## Revendications

1. Procédé pour déterminer la pression dans la chambre de combustion dans un cylindre d'un moteur à combustion interne, avec un capteur de pression, caractérisé par le fait que le signal (uo, u1, u2) du capteur est détecté et mémorisé pour une première position (So), une seconde position (S1) et une troisième position (S2) du piston au cours d'un cycle de travail du cylindre,
qu'une pression de référence (p0) est associée au signal (uo) du capteur, pour une première position (So) du piston, et
que la pression (px) est calculée pour une position quelconque (Sx) du piston conformément à

$$px = po + E (ux - uo) \qquad (5a)$$

avec :

$$E = po \left[ \frac{1}{\dfrac{u2-u1}{K} - u1 + uo} \right] \qquad (8)$$

avec :
ux = signal du capteur pour une position quelconque (Sx) du piston
E = sensibilité du capteur de pression,
K = constante.

2. Procédé suivant la revendication 1, caractérisé par le fait que la pression de référence (po) est fonction de la pression atmosphérique.

3. Procédé suivant la revendication 1, caractérisé par le fait que la première position prédéterminée (So) du piston correspond au point mort haut (OTL) lors d'un changement de charge.

4. Procédé suivant la revendication 1, caractérisé par le fait que les seconde et troisième position (S1,S2) du piston sont situées dans une gamme allant d'environ 70 degrés à 40 degrés du vilebrequin en amont du point mort haut (OTV) lors de la combustion.

5. Procédé suivant la revendication 1, caractérisé par le fait que les seconde et troisième position (S1,S2) du piston sont éloignées l'une de l'autre d'environ 20 degrés du vilebrequin.

6. Procédé suivant la revendication 1, caractérisé par le fait qu'au moins l'un des trois signaux (uo, u1, u2) du capteur, associés aux trois positions (So, S1, S2) du piston, sont déterminés par formation de la valeur moyenne à partir d'un nombre prédéterminé de valeurs des signaux (uo, u1, u2) du capteur, détectés dans une zone déterminée en amont et en aval de la position respective (So, S1, S2) du piston.

7. Procédé suivant la revendication 1, caractérisé par le fait qu'au moins l'un des signaux (u0, u1, u2) du capteur, associés aux trois positions (So, S1, S2) du piston est déterminé par formation d'une valeur moyenne courante à partir d'un nombre prédéterminé de valeurs des signaux (u0, u1, u2) du capteur, détectés au cours de cycles de travail successifs.

8. Procédé suivant la revendication 1, caractérisé par le fait que la sensibilité (E) du capteur de pression est déterminée par formation de la valeur moyenne courante à partir d'un nombre prédéterminé de valeurs calculées dans des cycles successifs de travail.

9. Procédé suivant la revendication 1, caractérisé par le fait que la constante (K) est mémorisée dans un ensemble de caractéristiques en fonction de l'angle du vilebrequin et du point de fonctionnement.

10. Procédé suivant la revendication 9, caractérisé par le fait que la constante est déterminée par

$$K = \left(\frac{V1}{V2}\right)^{n} - 1 \qquad (7)$$

avec :
V1     = volume de la chambre de combustion du cylindre pour la seconde position (S1) du piston,
V2     = volume de l'espace de combustion de la chambre de combustion du cylindre pour la troisième position (S2) du piston, et
n     = exposant polytrope (environ 1,35 pour un moteur à essence).

11. Procédé suivant la revendication 10, caractérisé par le fait que l'exposant polytrope (n) associé au moteur à combustion interne est mémorisé dans un ensemble de caractéristiques, en fonction du point de fonctionnement.

12. Procédé suivant la revendication 1, caractérisé par le fait qu'un signal d'erreur est déclenché lorsque la sensibilité déterminée (E) ou sa variation dans le temps se situe à l'extérieur d'une gamme prédéterminée de valeurs.